(19) Europäisches Patentamt

European Patent Office

Office européen des brevets

(11) EP 1 080 357 B1

(12) **EUROPÄISCHE PATENTSCHRIFT**

(45) Veröffentlichungstag und Bekanntmachung des Hinweises auf die Patenterteilung:
**30.07.2003 Patentblatt 2003/31**

(21) Anmeldenummer: **99934503.6**

(22) Anmeldetag: **17.05.1999**

(51) Int Cl.$^7$: **G01M 17/04**

(86) Internationale Anmeldenummer:
**PCT/DE99/01464**

(87) Internationale Veröffentlichungsnummer:
**WO 99/060368 (25.11.1999 Gazette 1999/47)**

(54) **VERFAHREN UND VORRICHTUNG ZUM TESTEN VON RADAUFHÄNGUNGEN**

METHOD AND DEVICE FOR TESTING WHEEL SUSPENSIONS

DISPOSITIF POUR TESTER DES SUSPENSIONS DE ROUE

(84) Benannte Vertragsstaaten:
**BE DE DK FI FR IT NL SE**

(30) Priorität: **18.05.1998 DE 19823372**
**18.05.1998 DE 19823367**
**18.05.1998 DE 19822641**

(43) Veröffentlichungstag der Anmeldung:
**07.03.2001 Patentblatt 2001/10**

(73) Patentinhaber: **ROBERT BOSCH GMBH**
**70442 Stuttgart (DE)**

(72) Erfinder:
• **ANLAUF, Juergen**
**D-73035 Goeppingen (DE)**

• **GERN, Christian**
**D-73249 Wernau (DE)**
• **FISCHER, Uwe**
**D-71409 Schwaikheim (DE)**
• **HOSS, Reinhard**
**D-73207 Plochingen (DE)**

(74) Vertreter: **Brommer, Hans Joachim, Dr.-Ing. et al**
**Lemcke, Brommer & Partner**
**Patentanwälte**
**Postfach 11 08 47**
**76058 Karlsruhe (DE)**

(56) Entgegenhaltungen:
EP-A- 0 476 746          EP-A- 0 611 960
WO-A- 94/02825          DE-A- 19 600 724
US-A- 3 937 058

## Beschreibung

Stand der Technik

Die Erfindung betrifft ein Verfahren zum Testen der Radaufhängung, insbesondere der Stoßdämpfer eines Kraftfahrzeuges, wobei die Räder einer Radachse auf Radaufnahmen aufgestellt werden, die über einen, von einem Motor angetriebenen Schwingungserzeuger gleichzeitig zu Schwingungen angeregt werden, wobei während der Schwingung die dynamische Aufstandkraft der Räder auf den Radaufnahmen gleichzeitig erfaßt wird, sowie eine Vorrichtung zur Durchführung eines solchen Verfahrens.

Ein derartiges Verfahren ist in der DE 11 15 439 A1 angegeben. Bei diesem bekannten Verfahren ist ein Schwingungsprüfstand für Kraftfahrzeuge vorgesehen, bei dem die vier Räder des Kraftfahrzeuges auf Radaufnahmen aufgestellt werden können. Die Radaufnahmen können in vertikale Schwingbewegungen versetzt werden. Zwischen dem Rad und der Radaufnahme ist eine Kraftmessdose angebracht, die die während des Messverlaufes auftretenden Kräfte ermittelt. Hierbei ist eine zuverlässige Aussage zu Radaufhängungseigenschaften mit Schwierigkeiten verbunden.

Aus der DE 196 00 724 A1 ist ein Verfahren zur Ermittlung von zur Querund/oder Längsbeschleunigung eines Fahrzeuges analogen Signalen bekannt. Mit diesem Verfahren wird eine Messung während des Fahrbetriebes durchgeführt. Ein Verfahren zur Testung der Radaufhängung ist aus dieser Entgegenhaltung nicht bekannt.

In der DE 195 02 502 A1 ist ein Radaufhängungstester beschrieben, der einer weiteren Verwendungsmöglichkeit zugeführt werden soll. Eine gegenphasige Ansteuerung der beiden Räder einer Achse wird mit zwei getrennten Antriebseinheiten vorgenommen. Jede Schwingung arbeitet unabhängig von der anderen. In einer ersten Funktion dient der Radaufhängungstester zur Ermittlung der Funktionstüchtigkeit von Stoßdämpfern. In einer zweiten Funktion werden die Räder einer Radachse in eine Schwingbewegung mit einer Frequenz von 100 Hz versetzt. In diesem Zustand können Klappergeräusche im Fahrzeuginnenraum lokalisiert werden.

Die EP 0 491 440 A1 zeigt ein Verfahren zum Prüfen einer Radaufhängung von Kraftfahrzeugen, bei dem beide Räder einer Achse gleichzeitig in vertikale Schwingungen versetzt und sowohl eine Kraftmessung als auch eine Weg- bzw. Geschwindigkeits- oder Beschleunigungsmessung der Bodenplattform vorgenommen werden. Der Schwingungsfrequenzbereich reicht von 0 bis 25 Hz und es ist angegeben, dass die Anregung mittels eines Motors und einer Schwungmasse sowohl anklingend als auch abklingend vorgenommen wird. Eine gegenphasige Anregung geht aus dieser Druckschrift nicht hervor.

Die EP 0 476 746 A1 zeigt die Anregung der Schwingungen mittels eines Motors und eines Schwungrades mit anklingender und abklingender harmonischer Erregung im Bereich zwischen 0 und 25 Hz. Hierbei werden die von der Bodenplatte auf die Reifen ausgeübten vertikalen Kräfte und die Position bzw. die Geschwindigkeit oder Beschleunigung der Bodenplatten gemessen. Eine gegenphasige Anregung ist nicht erwähnt.

Die DE 43 05 048 A1 bezieht sich insbesondere auf die Auswertung einer Schwingungsdämpferprüfung mit einem mathematischen Modell. Auf den Aufbau einer Prüfeinrichtung im einzelnen ist jedoch nicht eingegangen.

Ein weiteres Verfahren ist in der sogenannten "EUSAMA-Norm" beschrieben. Hierbei wird ein Rad einer Radachse über die Radaufnahme zu sinusförmigen Schwingungen in vertikaler Richtung veranlaßt. Der Motor treibt die Radaufnahme mit einer Schwingungsfrequenz von 24 Hz an. Anschließend wird der Motor abgeschaltet, so dass die Radaufnahme, unterstützt durch eine Schwungmasse, kontinuierlich ausschwingt. Während dieses Ausschwingens wird die Resonanzfrequenz ermittelt und die dabei vorhandene minimale Aufstandskraft ins Verhältnis zur dynamischen Aufstandskraft gesetzt. Der hierbei erhaltene Wert liefert eine Kenngröße, die eine Aussage über den Zustand der Radaufhängung ermöglicht. Der Meßvorgang wird bei dem zweiten Rad der Radachse wiederholt.

Bei einer derzeit bekannten Variante von Radaufhängungstestern wird für jede Radaufnahme ein Motor eingesetzt. Die andere Variante verwendet einen Motor mit zwei Abtriebswellen. An diese sind über Freiläufe die Wellen angekoppelt, die die Schwingungserzeuger (Exzenter) antreiben. Infolge der Verwendung eines zusätzlichen Motors bzw. der Freiläufe entsteht ein hoher konstruktiver Aufwand.

Ein Verfahren mit den Merkmalen des Oberbegriffes von Patentanspruch 1 ist durch die US-A-3937058 bekannt geworden. Durch die gegenphasige Anregung werden die statischen Aufstandskräfte der beiden Räder gegeneinander neutralisiert. Dadurch kann man mit geringen Antriebsleistungen des Motors sowie kleinen Schwungmassen den konstruktiven Aufwand für den Radaufhängungs-Tester reduzieren.

Durch die WO-A-94/02825 ist eine Vorrichtung zur automatischen Stossdämpferprüfung bekannt, bei der mit einer mechanischen Antriebseinheit gearbeitet wird, wobei der Motor Antriebswellen, die einen Exzenter tragen, antreibt, um die gewünschten Schwingungen zu erzeugen.

ES ist Aufgabe der Erfindung, ein Verfahren der eingangs genannten Art bzw. eine Vorrichtung zur Durchführung dieses Verfahrens bereit zu stellen, bei dem bzw. bei der für den Radaufhängungs-Tester ein einfacher konstruktiver Aufbau verwirklichbar und gleichzeitig eine zuverlässige und zeitsparende Messwerterfassung bei erhöhter Aussagekraft ermöglicht ist.

Diese Aufgabe wird erfindungsgemäß dadurch gelöst, dass die beiden Bodenplatten oder Radaufnahmen unterschiedliche Masse besitzen und dass bei der Auswertung die Trägheitskräfte der Massen beider Bodenplatten berücksichtigt werden und aus den Betragsfrequenzgängen als Parameter die Reifensteifigkeit (cr), die ungefederte Masse (mr) sowie die hauptsächlich von einem jeweiligen Stossdämpfer verursachte Dämpfung (rf) ermittelt werden.

Durch die gesonderte Berücksichtigung der Bodenplatten werden die Einflüsse und Zustände der einzelnen Radaufhängungskomponenten genauer als bisher bestimmbar.

Dabei kann nach einer möglichen Erfindungsvariante vorgesehen sein, dass die beiden Radaufnahmen nacheinander gleich- und dann gegenphasig oder umgekehrt erst gegenphasig und dann gleichphasig angeregt werden.

Als weiterer Bestimmungsparameter kann während eines Testlaufes die Wankbewegung des Fahrzeuges um die Längs- bzw. Querachse ermittelt werden. Es hat sich gezeigt, dass sich speziell bei niedrigen Frequenzen in dieser Bewegung ein qualitativ hoher Informationsgehalt über den Fahrwerks- und Stoßdämpferzustand entnehmen läßt. Die Wankbewegung kann beispielsweise mittels eines Piezokreisels oder eines Drehratensensors ermittelt werden.

Bei einer weiteren Ausführungsform ist vorgesehen, dass die beiden Räder einer Achse in vertikale Schwingungen versetzt und Radaufstandskräfte auf einer Radaufnahme in Form einer Bodenplatte sowie Wege während der Schwingungen gemessen werden, dass beide Räder auf einer jeweiligen Bodenplatte aufstehend mittels dieser in Schwingungen versetzt werden, die unterschiedliche Frequenzen im Bereich zwischen 1 Hz und 25 Hz durchlaufen und dass zusätzlich zu den Radaufstandskräften auf den beiden Bodenplatten deren Weg oder Geschwindigkeit oder Beschleunigung gemessen wird.

Mittels der beidseitigen, gegenphasigen Anregung der Schwingungen an beiden Rädern einer Achse wird eine reale Fahrsituation am reellsten und härtesten nachgebildet, so dass auch die Aussagen zur Fahrsicherheit aus dem Schwingungsverhalten gut ablesbar sind. Insbesondere wird bei niedrigen Frequenzen im Bereich zwischen 1 bis 4 Hz auch eine Wankbewegung des Fahrzeuges angeregt und auswertbar. Für die möglichst sichere Bestimmbarkeit der auszuwertenden Parameter trägt bei, dass zusätzlich zu den Radaufstandskräften auf den beiden Bodenplatten deren Weg, Geschwindigkeit oder Beschleunigung gemessen wird.

Für den Aufbau und die gegenphasige und auch gleichphasige Anregung der Schwingungen sowie die Zuverlässigkeit der Auswertung sind die Maßnahmen vorteilhaft, dass die Radaufstandskräfte und die Wege oder Geschwindigkeiten oder Beschleunigungen sowohl während einer Anlaufzeit als auch während einer Ausklingzeit der Schwingungen gemessen, aufgezeichnet und gespeichert werden.

Um eine genügende Schwingungsanregung insbesondere auch bei niedrigen Frequenzen zum Untersuchen der Radaufhängungseinflüsse bei Wankbewegungen mit einfachen Maßnahmen sicherzustellen, ist weiterhin vorgesehen, dass die Anregung der Schwingungen auch in einem Frequenzbereich zwischen 1 und 4 Hz erfolgt und dass zur Anregung der Schwingungen die Rotationsenergie einer die Bewegung der Bodenplatten anregenden Schwungmasse groß gegenüber der Differenz der Lage- und Federenergien der linken und rechten Seite des Fahrzeuges ist.

Eine zuverlässige Auswertung wird dadurch unterstützt, dass die beiden Bodenplattformen mittels eines gemeinsamen Motors und einer gemeinsamen Schwungmasse in Bewegung versetzt werden, bis die Frequenz ihrer Schwingungen etwa 25 Hz beträgt und dass anschließend der Antrieb der Schwungmasse abgeschaltet wird und die Frequenz der Schwingungen der Bodenplatte entsprechend der abnehmenden Rotationsenergie der Schwungmasse kontinuierlich abnimmt. Dadurch werden Meßdaten in den wesentlichen Frequenzbereichen erhalten, die genauere Aussagen hinsichtlich der Eigenschaften und Zustände verschiedener Radaufhängungskomponenten ergeben.

Zur Unterstützung und Verfeinerung der Auswertung ist weiterhin vorteilhaft vorgesehen, dass zusätzlich eine Bewegungsmessung der Räder und/oder der Karosserie erfolgt und auch diese Meßdaten aufgezeichnet und gespeichert werden.

Eine verbesserte Anpassung der Meßbedingungen an reale Situationen und damit zuverlässigere Aussagen über die Sicherheit betreffende Parameter werden dadurch erhalten, dass die Amplitude der Anregung bei niedrigeren Frequenzen höher ist als bei höheren. Auf der Straße haben üblicherweise niedere Frequenzen hohe Wegamplituden und hohe Frequenzen niedere Wegamplituden, so dass bei dieser Art der Anregung die Bodenhaftung realitätsnahe bewertbar ist.

Für die Auswertung sind weiterhin die Maßnahmen vorteilhaft, dass als Parameter die gefederte Masse als Differenz der statischen Radlast und der ungefederten Masse gewonnen wird und daß bei der Auswertung die Beziehung herangezogen wird, dass die Massen der beidens Bodens platten $mp_1$ und $mp_2$ in Reihe zur ungefederten Masse mr mit der Reifensteifigkeit oder einen Parallelschwingkreis bilden, der ein Minimum im Betragsfrequenzbereich in der Nähe von

$$fmin_i = \frac{\pi}{2}\sqrt{cr\frac{mr + mp_i}{mr \cdot mp_i}}, \; i = 1,2$$

erzeugt.

Um Fehlereinflüsse bei der Messung durch die Anordnung der Räder auf der Bodenplatte auszuschließen, sind die Maßnahmen vorteilhaft, dass die Positionierung der Räder auf der jeweiligen Bodenplatte und die Einhaltung der Positionierung während der Prüfung mittels unter den Bodenplatten angeordneter Kraftaufnehmer, die auch für die Prüfung verwendet werden, überwacht wird.

Die Auswertung und Berechnung aktueller Parameter der Radaufhängung erfolgt vorteilhaft in der Weise, dass die Auswertung mittels komplexer mathematischer Verfahren unter Berücksichtigung von Nichtlinearitäten von Radaufhängungskomponenten und von Anregungskomponenten erfolgt.

Ferner ist für die Ermittlung der aktuellen Parameter der Radaufhängung eine Vorgehensweise in der Art günstig, dass die Auswertung mittels eines Modells erfolgt, wobei Startparameter über eine vereinfachte lineare Impedanzanalyse und Näherungsformeln ermittelt und mittels eines Rechenprogrammes Modellparameter und Kennlinien solange variiert werden, bis ein gefundener Parametersatz am besten mit einer gemessenen Kurve korreliert. Mit einem leistungsfähigen Rechenprogramm ergeben sich bei dieser Vorgehensweise aussagekräftige Werte für die zu ermittelnden Parameter der Radaufhängung.

Eine Vorrichtung zur Durchführung des erfindungsgemäßen Verfahrens sieht vor, dass der Motor zwei Antriebswellen antreibt, die jeweils an einen, der jeweiligen Radaufnahme zugeordneten Schwingungserzeuger angekoppelt sind.

Um sowohl ein gleichphasiges als auch gegenphasiges Auslenken der beiden Radaufnahmen verwirklichen zu können, sieht eine mögliche Erfindungsausgestaltung vor, dass die Antriebswellen jeweils als Schwingungserzeuger jeweils einen Exzenter tragen, der über einen Nocken die Radaufnahme zur Schwingung anregt, und dass die Antriebswellen oder die Exzenter mittels einer Wechseleinheit gegeneinander verdrehbar sind. Die Wechseleinheit ermöglicht die automatische Phasenverstellung.

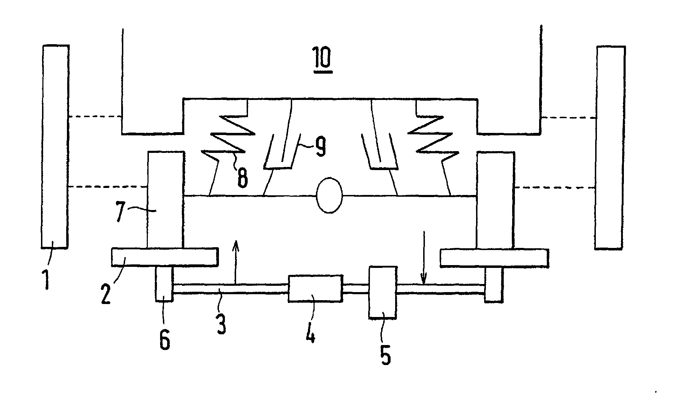

Die Erfindung wird im Folgenden anhand des in der Zeichnung dargestellten Ausführungsbeispieles näher erläutert.

Die Fig. zeigt in schematischer Darstellung einen Radaufhängungs-Tester, der einen Motor 4 besitzt. Von dem Motor 4 werden zwei Antriebswellen 3 angetrieben. Die Antriebswellen 3 sind über den Motor 4 starr miteinander gekoppelt. Auf einer der Antriebswellen 3 ist eine Schwungmasse 5 befestigt. Die beiden Antriebswellen 3 tragen auf ihren dem Motor 4 abgekehrten Enden jeweils einen Schwingungserzeuger 6. Die Schwingungserzeuger 6 sind vorliegend als Exzenter ausgebildet. Ein Nocken des Exzenters treibt eine Radaufnahme 2 in Form einer Bodenplattform an und veranlaßt diese zu vertikalen Schwingungen. Wie sich der Figur entnehmen läßt, werden die beiden Radaufnahmen 2 gegenphasig bewegt. Denkbar ist es auch, dass die linke Antriebswelle 3 um 180° verdreht wird, so dass die beiden Radaufnahmen 2 auch gleichphasig anregbar sind. Hierzu kann beispielsweise eine vollautomatische Wechseleinheit verwendet werden.

Die zwei Radaufnahmen 2 werden mittels des Motors 4 über die Antriebswellen 3 mit der Schwungmasse 5 und den beiden Exzentern 6 in vertikale Schwingungen versetzt. Ferner sind beidseitig Wegaufnehmer 1 für Radfelgen und Karosserie 10 bzw. Fahrzeugaufbau angeordnet. Das Fahrzeug steht mit den beiden Rädern 7 einer Achse auf einer jeweiligen Radaufnahme bzw. Bodenplatte 2. Die Karosserie 10 ist mit den Rädern 7 über Fahrzeugfedern 8 und Stoßdämpfer 9 gekoppelt.

Die den beiden Bodenplatten 2 zugeordneten Exzenter 6 können um 180° gegeneinander verdreht sein, so dass mit ihnen eine gegenphasige Schwingung der beiden Bodenplatten 2 bewirkt wird. In Bezug auf die Fahrsicherheit ist eine derartige gegenphasige Anregung der reellste und härteste Test, mit dem das Fahrzeug zu Wankbewegungen angeregt wird, wenn die Anregungsfrequenz der Resonanz des Fahrzeugaufbaus und der Fahrzeugfederung entspricht, die etwa im Bereich zwischen 1 bis 4 Hz liegt.

Der Motor 4 beschleunigt die Schwungmasse 5 in Form einer Schwungscheibe auf ca. 25 Hz und wird dann abgeschaltet. Die Schwungmasse 5 verliert aufgrund von Reibungsvorgängen Energie und rotiert daher mit abnehmender Frequenz. Kräfte und Bewegungen während der Beschleunigungszeit und Ausklingzeit werden gemessen, aufgezeichnet und gespeichert. Dazu wird zusätzlich zu der Radaufstandskraft auf den Bodenplatten 2 der Weg der Bodenplatten 2 beispielsweise über einen Drehgeber gemessen, der auf einer Exzenter-Achse montiert ist.

Der Radaufhängungstester kann bei dem beschriebenen Aufbau insbesondere auch mit Frequenzen bis unterhalb der Resonanz der gefederten Masse in Form des Fahrzeugaufbaus und der Fahrzeugfederung im Bereich zwischen 1 und 4 Hz angeregt werden, so dass ein wichtiger Gesichtspunkt für die Ermittlung der Radaufhängungsparameter gewährleistet ist. Dazu ist die Rotationsenergie der Schwungmasse 5 groß gegenüber der Differenz der Lage- und Federenergien von linker und rechter Fahrzeugseite gewählt, so dass das Frequenzspektrum sicher und mit genügend langer Dauer durchlaufen wird.

Die Bewegungsmessung der Räder 7 und der Karosserie 10 bzw. deren Weg, Geschwindigkeit oder Beschleunigung kann mit verschiedenen Aufnehmern, beispielsweise Piezo- oder Ultraschall-Beschleunigungssensoren oder optisch z.B. mit Bildverarbeitung unter Verwendung einer Zeilenkamera, Videokamera, eines Lasers oder Geräten ähnlich Barkode-Lasern erfolgen. Bei optischer Aufnahme kann eine Kontrastmarkierung am Fahrzeug angebracht werden.

Unter Berücksichtigung des Einflusses der Trägheit der bekannten Masse $mp_1$, $mp_2$ der beiden Bodenplatten 2, die zur besseren Unterscheidung verschiedene Masse besitzen, werden mathematisch die Parameter-Reifensteifigkeit cr, ungefederte Masse mr, die insbesondere durch den Fahrzeugaufbau bzw. die Karosserie 10 gebildet wird, sowie die hauptsächlich vom Stoßdämpfer 9 verursachte Dämpfung rf ermittelt. Bei genügend tieffrequenter Anregung sowie Auswertung beider Seiten läßt sich zusätzlich die Federkonstante cf der Fahrzeugfederung 8 ermitteln. Die gefederte Masse mf ergibt sich als Differenz der statischen Radlast und der ungefederten Masse mr. Bei der Auswertung wird insbesondere der Sachverhalt ausgenutzt, dass die Massenanteile mp$_1$, mp$_2$ der beiden Bodenplatten 2 in Reihe zu der ungefederten Masse mr mit der Reifensteifigkeit cr einen Parallelschwingkreis bilden, der ein Minimum im Betragsfrequenzgang in der Nähe von

$$fmin_i = \frac{\pi}{2} \sqrt{cr\frac{mr + mp_i}{mr \cdot mp_i}}, \; i= 1,2$$

erzeugt. Für eine genaue Auswertung variiert ein Programm alle Parameter des mathematischen Modells und sucht den Parametersatz heraus, der am besten mit den Meßkurven korreliert.

Dabei kann eine wichtige Voraussetzung für eine korrekte Messung, dass sich das Fahrzeug während des Schwingungsvorganges nicht relativ zu den Kraftaufnehmern 1 bewegt, leicht überprüft und sichergestellt werden, wenn die Kraftaufnehmer 1 quer zur Fahrtrichtung eingebaut sind.

Die Messung kann in Kombination mit weiteren Bewegungsgrößen, beispielsweise des Phasenbezuges zwischen Kraft und Weg der Bodenplatten 2 ergänzt werden.

Die Auswertung erfolgt beispielsweise mittels eines komplexen mathematischen Verfahrens, wie einer komplexen nichtlinearen Impedanzanalyse und optional mit den Informationen der Bewegungen der Radfelgen und der Karosserie 10. Bei den mathematischen Verfahren werden die Nichtlinearitäten der Radaufhängungskomponenten sowie des Radaufhängungstesters berücksichtigt. Die Lösung der Differentialgleichungen kann vorteilhaft im Bildbereich mittels Laplace-Transformation sowie dem Annähern der nichtlinearen Kennlinien mittels Newton-Raphson Verfahren erfolgen. Die Startparameter werden über eine vereinfachte lineare Impedanzanalyse und Näherungsformeln ermittelt. Mittels eines optimierenden Rechenprogrammes werden dann alle Parameter und Kennlinien optimiert und der Parametersatz herausgesucht, der am besten mit den gemessenen Kurven korreliert. Zum Ermitteln der Modellparameter und bei der Auswertung kann eine Fahrzeugdatenbank herangezogen werden, die jedoch hohen Pflegeaufwand erfordert. Vorteilhaft ist alternativ eine halbautomatische Bewertung durch ein Experten-Programm, bei dem ein Benutzer interaktiv Fahrzeugdaten eingibt und auch eine Grobklassifikation nach Fahrzeugart (sportlich, komfortabel, Kleinwagen, Geländewagen usw.) vorgenommen werden kann. Das Analyseprogramm ermittelt dann aus den Fahrwerksparametern, der Massenverteilung und den Zusatzinformationen Aussagen über Fahrsicherheit, den Fahrkomfort sowie den Zustand der Fahrwerkskomponenten, insbesondere auch der Stoßdämpfer.

Durch die gleichzeitige Anregung beider Fahrzeugseiten ergibt sich auch eine kurze Meßzeit. Zudem werden auch solche Fehler der Radaufhängung erkannt, die besonders beim Auftreten von Seitenkräften zutage treten, wie horizontales Lagerspiel, da das Fahrzeug zu Wankbewegungen angeregt wird. Der Aufbau des Radaufhängungstesters in der beschriebenen Weise mit nur einem Motor 4 und einer Schwungmasse 5 ist nicht nur relativ einfach, sondern auch kostengünstig. Als Nebenergebnis bei der Messung und Auswertung ist auch die Messung der Reifensteifigkeit und bei zusätzlicher Eingabe der Reifenbauart eine Aussage über den Luftdruck des Reifens möglich. Die Reifenbauart kann dabei mittels OCR-Leser aus dem Reifenaufdruck erfolgen.

**Patentansprüche**

1. Verfahren zum Testen der Radaufhängung, insbesondere der Stoßdämpfer, eines Kraftfahrzeuges, wobei die Räder einer Radachse auf Radaufnahmen oder Bodenplatten aufgestellt werden, die über einen von einem Motor angetriebenen Schwingungserzeuger gleichzeitig zu Schwingungen angeregt werden, wobei während der Schwingung die dynamische Aufstandskraft der Räder auf den Radaufnahmen gleichzeitig erfaßt wird und die beiden Radaufnahmen sowohl gleich- als auch gegenphasig zur Schwingung angeregt werden,
**dadurch gekennzeichnet,**
**dass** die beiden Bodenplatten oder Radaufnahmen unterschiedliche Masse besitzen, und
**dass** bei der Auswertung die Trägheitskräfte der Massen beider Radaufnahmen oder Bodenplatten berücksichtigt werden und aus den Betragsfrequenzgängen als Parameter die Reifensteifigkeit (cr), die ungefederte Masse (mr) sowie die hauptsächlich von einem jeweiligen Stoßdämpfer verursachte Dämpfung (rf) ermittelt werden.

2. Verfahren nach Anspruch 1,
**dadurch gekennzeichnet,**
**dass** die beiden Radaufnahmen nacheinander gleich- und dann gegenphasig oder umgekehrt erst gegenphasig und dann gleichphasig angeregt werden.

3. Verfahren nach Anspruch 1 oder 2,
**dadurch gekennzeichnet,**
**dass** während der Schwingung der Radaufnahmen die Wankbewegung des Kraftfahrzeuges um dessen Längs- und/oder Querachse erfaßt wird.

**4.** Verfahren nach Anspruch 3,
**dadurch gekennzeichnet,**
**dass** die Wankbewegung mittels eines Piezokreisels oder eines Drehratensensors ermittelt wird.

**5.** Verfahren nach einem der vorhergehenden Ansprüche,
**dadurch gekennzeichnet,**
**dass** die beiden Räder einer Achse in vertikale Schwingungen versetzt und Radaufstandskräfte auf den Radaufnahmen in Form jeweiliger Bodenplatten sowie Wege während der Schwingungen gemessen werden, dass Schwingungen unterschiedliche Frequenzen im Bereich zwischen 1 Hz und 25 Hz durchlaufen und
**dass** zusätzlich zu den Radaufstandskräften auf den beiden Bodenplatten deren Weg oder Geschwindigkeit oder Beschleunigung gemessen wird.

**6.** Verfahren nach enem der vorhergehenden Ansprüche,
**dadurch gekennzeichnet,**
**dass** die Radaufstandskräfte und die Wege oder Geschwindigkeiten oder Beschleunigungen sowohl während einer Anlaufzeit als auch während einer Ausklingzeit der Schwingungen gemessen, aufgezeichnet und gespeichert werden.

**7.** Verfahren nach einem der vorhergehenden Ansprüche,
**dadurch gekennzeichnet,**
**dass** die Anregung der Schwingungen auch in einem Frequenzbereich zwischen 1 und 4 Hz erfolgt und
**dass** zur Anregung der Schwingungen die Rotationsenergie einer die Bewegung der Radaufnahme bzw. Bodenplatte anregenden Schwungmasse groß gegenüber der Differenz der Lage- und Federenergien der linken und rechten Seite des Fahrzeuges ist.

**8.** Verfahren nach Anspruch 7,
**dadurch gekennzeichnet,**
**dass** die beiden Radaufnahmens oder Bodenplatten mittels eines gemeinsamen Motors und einer gemeinsamen Schwungmasse in Bewegung versetzt werden, bis die Frequenz ihrer Schwingungen etwa 25 Hz beträgt und
**dass** anschließend der Antrieb der Schwungmasse abgeschaltet wird und die Frequenz der Schwingungen der Radaufnahmen oder Bodenplatten entsprechend der abnehmenden Rotationsenergie der Schwungmasse kontinuierlich abnimmt.

**9.** Verfahren nach einem der vorhergehenden Ansprüche,
**dadurch gekennzeichnet,**

**dass** zusätzlich eine Bewegungsmessung der Räder und/oder der Karosserie erfolgt und auch diese Meßdaten aufgezeichnet und gespeichert werden.

**10.** Verfahren nach einem der vorhergehenden Ansprüche,
**dadurch gekennzeichnet,**
**dass** die Amplitude der Anregung bei niedrigeren Frequenzen höher ist als bei höheren.

**11.** Verfahren nach einem der vorhergehenden Ansprüche,
**dadurch gekennzeichnet,**
**dass** als Parameter die gefederte Masse (mf) als Differenz der statischen Radlast und der ungefederten Masse (mr) gewonnen wird und dass bei der Auswertung die Beziehung herangezogen wird, dass die Massen der Bodenplatten $mp_1$ und $mp_2$ in Reihe zur ungefederten Masse mr mit der Reifensteifigkeit or einem Parallelschwingkreis bildens, der ein Minimum im Betragsfrequenzbereich in der Nähe von

$$fmin_i = \frac{\pi}{2} \sqrt{cr.\frac{mr + mp_i}{mr \cdot mp_i}}, \; i = 1,2$$

erzeugt.

**12.** Verfahren nach einem der vorhergehenden Ansprüche,
**dadurch gekennzeichnet,**
**dass** die Positionierung der Räder auf der jeweiligen Bodenplatte und die Einhaltung der Positionierung während der Prüfung mittels unter den Bodenplatten angeordneter Kraftaufnehmer, die auch für die Prüfung verwendet werden, überwacht wird.

**13.** Verfahren nach einem der vorhergehenden Ansprüche,
**dadurch gekennzeichnet,**
**dass** die Auswertung mittels komplexer mathematischer Verfahren unter Berücksichtigung von Nichtlinearitäten von Radaufhängungskomponenten und von Anregungskomponenten erfolgt.

**14.** Verfahren nach einem der vorhergehenden Ansprüche,
**dadurch gekennzeichnet,**
**dass** die Auswertung mittels eines Modells erfolgt, wobei Startparameter über eine vereinfachte lineare Impedanzanalyse und Näherungsformeln ermittelt und mittels eines Rechenprogrammes Modellparameter und Kennlinien solange variiert werden, bis ein gefundener Parametersatz am besten mit einer gemessenen Kurve korreliert.

**15.** Vorrichtung zum Testen der Radaufhängung, insbesondere der Stoßdämpfer, eines Kraftfahrzeuges gemäss dem Verfahren nach einem der vorangehenden Ansprüchen mit Radaufnahmen (2) in Form von Bodenplatten zur Aufnahme der Räder (7) einer Radachse und einem Motor (4), der zwei Antriebswellen (3) antreibt, die jeweils an eine der jeweiligen Bodenplatte (2) zugeordneten Schwingungserzeuger (6) angekoppelt sind, **dadurch gekennzeichnet,** **dass** die Bodenplatten (2) unterschiedliche Massen besitzen.

16. Vorrichtung nach Anspruch 15, **dadurch gekennzeichnet,** **dass** die Antriebswellen (3) jeweils als Schwingungserzeuger (6) jeweils einen Exzenter tragen, der über einen Nocken die Radaufnahme (2) zur Schwingung anregt, und **dass** die Antriebswellen (3) oder die Exzenter mittels einer Wechseleinheit gegeneinander verdrehbar sind.

17. Vorrichtung nach Anspruch 15 oder 16, **dadurch gekennzeichnet,** **dass** die Bodenplatten (2) von dem Motor (4) in vertikale sinusförmige Schwingungen versetzbar sind, und **dass** zum Erfassen der Radaufstandskraft an den Bodenplatten (2) unter diesen jeweils mindestens ein Kraftaufnehmer (1) angeordnet ist.

**Claims**

1. A method of testing the wheel suspension, particularly the shock absorber, of a motor vehicle, wherein the wheels of a wheel axle are set up on wheel collets or floor plates that are at the same time excited to oscillations by way of a vibration generator driven by a motor, wherein during the vibration the dynamic contact force of the wheels on the wheel collets is detected and the two wheel collets are excited to vibrate both in phase and in phase opposition, **characterised in that,** the two wheel collets or floor plates have different weights, and in the course of the evaluation, the inertial forces of the masses of both the wheel collets or floor plates are taken into account and the tyre stiffness (cr), the unsprung mass (mr) as well as the damping (rf) caused mainly by a respective shock absorber are determined from the frequency responses as parameters.

2. A method according to claim 1, **characterised in that** the two wheel collets are excited, sequentially, in phase and then in phase opposition or conversely first in phase opposition then in phase.

3. A method according to claim 1 or 2, **characterised in that** during the vibration of the wheel collets the rolling movement of the motor vehicle about its longitudinal and/or transverse axes is detected.

4. A method according to claim 3, **characterised in that** the rolling movement is detected by a piezoelectric gyroscope or a rotational rate sensor.

5. A method according to one of the preceding claims, **characterised in that** the two wheels of an axle are set into vertical vibrations and the wheel contact forces on the wheel collets in the form of respective floor plates as well as their travel during the vibrations are measured; **in that** the vibrations pass through different frequencies in the range of 1 Hz to 25 Hz; and **in that**, in addition to the wheel contact forces on the two floor plates, their travel or velocity or acceleration is measured.

6. A method according to one of the preceding claims, **characterised in that** the wheel contact forces and the travels or velocities or accelerations are measured, recorded and stored both during a start-up period and finishing period of the vibration of the vibrations.

7. A method according to one of the preceding claims, **characterised in that** the excitation of the vibrations also takes place in the frequency range between and 1 and 4 Hz and **in that** for the excitation of vibrations the rotational energy of a vibration mass exciting the movement of the wheel collet or floor plate is large relative to the difference of the potential energy and the spring energy of the left and right sides of the vehicle.

8. A method according to claim 7, **characterised in that** the two wheel collets or floor plates are set into motion by means of a common motor and a common vibration mass until the frequency of their vibrations attains about 25 Hz, and **in that** thereafter the drive of the vibration mass is switched off and the frequency of vibrations of the wheel collets or floor plates is continuously decreased in correspondence with the decreasing rotational energy.

9. A method according to one of the preceding claims, **characterised in that**, additionally, a measurement of movement of the wheels and/or the chassis takes place and these measurement data are also recorded and stored.

10. A method according to one of the preceding claims, **characterised in that** the amplitude of the excitation is higher at lower frequencies than at higher rates.

**11.** A method according to one of the preceding claims, **characterised in that** as parameter the sprung mass (mf) is obtained as a difference of the static wheel load and the unsprung mass (mr), and **in that**, in the course of evaluation, use is made of a relationship that the masses (mp$_1$ and mp$_2$) of the floor plates in series with the unsprung mass (mr) form a parallel-resonant circuit with tyre stiffness (cr) which produces a minimum of the frequency range in the vicinity of

$$fmin_i = \frac{\pi}{2} \sqrt{cr.\frac{mr + mp_i}{mr \cdot mp_i}},\ i = 1,2$$

**12.** A method according to one of the preceding claims, **characterised in that** the positioning of the wheels on the respective floor plate and the maintenance of the positioning during testing is monitored by a force detector arranged beneath the floor plates and used also for the testing.

**13.** A method according to one of the preceding claims, **characterised in that** the evaluation takes place by way of complex mathematical methods taking into consideration the non-linearities of wheel suspension components and of excitation components.

**14.** A method according to one of the preceding claims, **characterised in that** the evaluation takes place by way of a model wherein the starting parameter is determined by way of simplified linear impedance analysis and approximation formulae and the model parameters and characteristic curves are varied by means of a compute program until a parameter set is found that best correlates with a measured curve.

**15.** Apparatus for testing a wheel suspension, particularly a shock absorber, of a motor vehicle according to the process of one of the preceding claims, with wheel collets (2) in the form of floor plates for receiving the wheels (7) of a wheel axle and a motor (4) that drives two drive shafts (3) respectively coupled to a vibration generator (6) associated with a respective floor plate (2), **characterised in that** the floor plates (2) have different masses.

**16.** Apparatus according to claim 15, **characterised in that** the drive shafts (3) carry a respective eccentric member as a respective vibration generator (6) that excites the wheel collet (2) to vibration via a cam, and **in that** the drive shafts (3) or the eccentric members are rotatable relative to each other by means of a change-over unit.

**17.** Apparatus according to claim 15 or 16, **characterised in that** the floor plates (2) are settable by the motor (4) into vertical sinusoidal vibrations, and **in**

**that** in order to detect the wheel contact force at the floor plates (2) at least one respective force detector (1) is arranged beneath the floor plates.

## Revendications

**1.** Procédé pour tester les suspensions de roue, en particulier les amortisseurs d'un véhicule, dans lequel les roues d'un essieu sont placées sur des logements de roue ou des plaques de plancher, qui sont excitées en même temps pour produire des oscillations par un générateur d'oscillations entraîné par un moteur, dans lequel, pendant l'oscillation, la force dynamique de soulèvement des roues est saisie en même temps sur les logements de roue et les deux logements de roue sont excités pour produire une oscillation en phase et en opposition de phase, **caractérisé en ce que** les deux plaques de plancher ou logements de roue ont des masses différentes, et **en ce que**, lors de l'analyse, les forces d'inertie des masses des deux logements de roue ou plaques de plancher sont prises en compte et la rigidité des pneus (cr), la masse non suspendue (mr) ainsi que l'amortissement (rf) provoqué principalement par un amortisseur respectif sont détectés comme paramètres à partir des réponses fréquentielles des valeurs.

**2.** Procédé selon la revendication 1, **caractérisé en ce que** les deux logements de roue sont excités l'un après l'autre en phase et en opposition de phase ou inversement, d'abord en opposition de phase puis en phase.

**3.** Procédé selon la revendication 1 ou 2, **caractérisé en ce que**, lors de l'oscillation des logements de roue, le mouvement de roulis du véhicule est saisi autour de son axe longitudinal et/ou transversal.

**4.** Procédé selon la revendication 3, **caractérisé en ce que** le mouvement de roulis est détecté au moyen d'un piézogyroscope ou d'un capteur de taux de rotation.

**5.** Procédé selon l'une quelconque des revendications précédentes, **caractérisé en ce que** les deux roues d'un axe sont soumises à des oscillations verticales et les forces de soulèvement des roues sont mesurées sur les logements de roue sous forme de plaques de plancher respectives ainsi que de parcours lors des oscillations, **en ce que** les oscillations correspondent à des fréquences différentes comprises entre 1 Hz et 25 Hz, et **en ce que**, outre les forces de soulèvement des roues sur les deux plaques de plancher, leur parcours ou vitesse ou accélération est mesuré.

**6.** Procédé selon l'une quelconque des revendications précédentes, **caractérisé en ce que** les forces de soulèvement des roues et les parcours ou vitesses ou accélérations sont mesurés, inscrits et enregistrés aussi bien pendant une période de démarrage que pendant une période de décroissance des oscillations.

**7.** Procédé selon l'une quelconque des revendications précédentes, **caractérisé en ce que** l'excitation des oscillations est également effectuée dans une plage de fréquence comprise entre 1 et 4 Hz, et **en ce que**, pour exciter les oscillations, l'énergie de rotation d'une masse centrifuge entraînant le mouvement du logement de roue ou de la plaque de plancher est élevée par rapport à la différence de l'énergie potentielle et l'énergie de ressort des côtés gauche et droit du véhicule.

**8.** Procédé selon la revendication 7, **caractérisé en ce que** les deux logements de roue ou plaques de plancher sont mis en mouvement au moyen d'un moteur commun et d'une masse centrifuge commune jusqu'à ce que la fréquence de leurs oscillations s'élève à environ 25 Hz, et **en ce que**, par la suite, l'entraînement de la masse centrifuge est arrêté et que la fréquence des oscillations des logements de roue ou des plaques de plancher diminue continuellement conformément à l'énergie de rotation décroissante de la masse centrifuge.

**9.** Procédé selon l'une quelconque des revendications précédentes, **caractérisé en ce qu'**une mesure de mouvement des roues et/ou de la carrosserie est également effectuée et que ces données de mesure sont inscrites et enregistrées.

**10.** Procédé selon l'une quelconque des revendications précédentes, **caractérisé en ce que** l'amplitude de l'excitation est plus élevée pour des fréquences faibles que pour des fréquences élevées.

**11.** Procédé selon l'une quelconque des revendications précédentes, **caractérisé en ce que** la masse suspendue (mf) en tant que paramètre est obtenue par la différence entre la charge de roue statique et la masse non suspendue (mr), et **en ce que**, lors de l'analyse, la relation est utilisée pour que les masses des plaques de plancher $mp_1$ et $mp_2$, ensuite de la masse non suspendue mr, forment un circuit oscillant parallèle avec la rigidité des pneus cr, circuit qui génère une valeur minimum dans la zone de fréquences de valeurs correspondant environ à

$$\text{fmin}_i = \frac{\pi}{2} \sqrt{cr.\frac{mr + mp_i}{mr \cdot mp_i}}, \; i = 1,2.$$

**12.** Procédé selon l'une quelconque des revendications précédentes, **caractérisé en ce que** le positionnement des roues sur la plaque de plancher respective et le maintien de la position lors du contrôle sont surveillés au moyen de récepteurs de force placés sous les plaques de plancher, qui sont également utilisés pour le contrôle.

**13.** Procédé selon l'une quelconque des revendications précédentes, **caractérisé en ce que** l'analyse est effectuée au moyen de procédés mathématiques complexes en prenant en compte la non-linéarité d'éléments de suspension des roues et d'éléments d'excitation.

**14.** Procédé selon l'une quelconque des revendications précédentes, **caractérisé en ce que** l'analyse est effectuée au moyen d'un modèle, des paramètres initiaux étant déterminés par une analyse d'impédance linéaire simplifiée et des formules d'approximation et les paramètres de modèle et les courbes caractéristiques étant variés au moyen d'un programme de calcul jusqu'à ce que la meilleure corrélation possible existe entre un taux de paramètre déterminé et une courbe mesurée.

**15.** Dispositif pour tester les suspensions de roue, en particulier les amortisseurs d'un véhicule, selon le procédé selon l'une quelconque des revendications précédentes, avec des logements de roue (2) sous forme de plaques de plancher pour recevoir les roues (7) d'un essieu et avec un moteur (4), qui entraîne deux arbres de transmission (3), qui sont couplés respectivement à un générateur d'oscillations (6) associé à une des plaques de plancher (2) respective, **caractérisé en ce que** les plaques de plancher (2) comportent des masses différentes.

**16.** Dispositif selon la revendication 15, **caractérisé en ce que** les arbres de transmission (3) portent respectivement un excentrique comme générateur d'oscillations (6), excentrique qui excite le logement de roue (2) par une came pour générer des oscillations, et **en ce que** les arbres de transmission (3) ou les excentriques peuvent être tournés l'un par rapport à l'autre au moyen d'une unité de changement.

**17.** Dispositif selon la revendication 15 ou 16, **caractérisé en ce que** les plaques de plancher (2) peuvent être soumises par le moteur (4) dans des oscillations verticales de forme sinusoïdale, et **en ce qu'**au moins un récepteur de force (1) pour détecter la force de soulèvement des roues au niveau des plaques de plancher (2) est installé sous celles-ci.

EP 1 080 357 B1

10